# EUROPÄISCHE PATENTSCHRIFT

(11) **EP 3 282 511 B1**
(45) Veröffentlichungstag und Bekanntmachung des Hinweises auf die Patenterteilung: **11.03.2020**
(21) Anmeldenummer: 17185205.6
(22) Anmeldetag: 08.08.2017
(51) Int. Cl.: H01M 8/04014

(54) **SOFC-BRENNSTOFFZELLEN-STACK**
SOLID OXIDE FUEL CELL STACK
EMPILEMENT DE PILES À COMBUSTIBLE SOFC

(30) Priorität: 10.08.2016 DE 102016214907
(43) Veröffentlichungstag der Anmeldung: 14.02.2018
(73) Patentinhaber: Vaillant GmbH, 42859 Remscheid (DE)
(72) Erfinder: Reinert, Andreas, 58455 Witten (DE); Folkerts, Gordon, 40625 Düsseldorf (DE); Heiler, Christian, 58456 Witten-Herbede (DE)
(74) Vertreter: Popp, Carsten

(56) Entgegenhaltungen:
- EP-A1- 1 619 737
- EP-A2- 1 309 027
- EP-A2- 1 679 757
- DE-B3-102014 118 710
- DE-C1- 19 607 947

## Beschreibung

Die Erfindung bezieht sich auf eine Brennstoffzelle.

Brennstoffzellenanlage insbesondere mit einem SOFC-Brennstoffzellen-Stack verfügen zumeist über einen Startbrenner, mittels dessen der Stack auf Betriebstemperatur gebracht werden kann. Da die elektrochemische Reaktion im Stack meist nicht vollständig ist, verfügt die Anlage zumeist auch über einen Nachbrenner, in welchem die unverbrannten Gase vollständig verbrannt werden.

Dies hat zur Folge, dass derartige Brennstoffzellenanlagen zumeist sehr groß ausfallen und demzufolge viel Platz beanspruchen.

Aus der Patentschrift DE 10 2014 118 710 B3 ist ein Brennstoffzellensystem bekannt mit einer Wärmeübertragereinheit zwischen Reformer und Brennstoffzelle.

Die Patentanmeldung EP 1 679 757 A2 offenbart ein Brennstoffzellensystem mit Startbrenner.

Die Patentanmeldung EP 1 619 737 A1 lehrt ein Brennstoffzellensystem aus Wärmetauscher, Nachbrenner und Brennstoffzelle in Form eines Stapels übereinander anzuordnen.

Der Erfindung liegt die Aufgabe zugrunde, eine kompakte Bauweise bei Brennstoffzellenanalgen zu ermöglichen.

Diese Aufgabe wird durch eine Vorrichtung mit den Merkmalen des Anspruchs 1 durch eine kompakte Bauweise mittels aneinander angepassten Komponenten erreicht gelöst.

Vorteilhafte Ausgestaltungen ergeben sich durch die Merkmale der abhängigen Ansprüche.

Die Erfindung wird nun anhand der Figuren detailliert erläutert.

Die Figuren zeigen eine Brennstoffzellenanlage mit einem Brennstoffzellen-Stack 1, einem Startbrenner 2, einem Nachbrennermodul 7 und einem Frischluft-Abgas-Wärmetauscher 8, in einer umschließenden, doppelwandigen Unterdruckammer 21. Bei dem Brennstoffzellen-Stack 1 handelt es sich um eine SOFC-Brennstoffzelle, welche alternierend Kathodengasräume und Anodengasräume aufweist. Der Brennstoffzellen-Stack 1, der Startbrenner 2 und das Nachbrennermodul 7 sind innerhalb eines dichten Blechmantels 22, welcher von Zu- und Ableitungen durchdrungen wird, angeordnet.

Der Frischluft-Abgas-Wärmetauscher 8 ist auf der einen Seite mit dem Nachbrennerausgang 12 des Nachbrennermoduls 7 und einem Abgasausgang 9 verbunden. Die andere Seite des Frischluft-Abgas-Wärmetauschers 8 ist mit einer Frischluftzuführung 10 aus der Umgebung sowie dem Frischlufteintritt 11 des Brennstoffzellen-Stacks 1 verbunden. Der Startbrenner 2 ist mit dem Brennstoffzellen-Stack 1 derart verbunden, dass die Abgase des Startbrenners 2 zum Brennstoffzellen-Stack 1 geleitet werden können.

Die Kathodengasströme des Brennstoffzellen-Stacks 1 sind über den Frischluft-Abgas-Wärmetauscher 8 mit der Frischluftzuführung 10 verbunden.

Der Startbrenner 2 verfügt über einen ersten Brennraum 3 in einem Startbrennermodul 4; das Nachbrennermodul 7 über einen zweiten Brennraum 6. Hierbei besteht das Startbrennermodul 4 aus einer Platte, in welcher der erste Brennraum 3 integriert ist. Ein Startbrennerausgang 13 ist in die Platte integriert. Ferner ist in das Startbrennermodul 4 ein Brenner zur Verbrennung eines Brenngas-Luft-Gemischs integriert. Der Startbrenner 2 verfügt über eine Zünd- und Überwachungseinrichtung 16 sowie ein Vlies 17. Ferner führt der Nachbrennerausgang 12 durch das Startbrennermodul 4.

Das Nachbrennermodul 7 besteht ebenfalls aus einer Platte, in welcher der zweite Brennraum 6 und der Nachbrennerausgang 12 integriert sind. Der erste Brennraum 3 des Startbrennermoduls 4 ist von dem zweiten Brennraum 6 des Nachbrennermoduls 7 mittels einer Trennwand 14 getrennt.

Im ersten Brennraum 3 des Startbrennermoduls 4 befindet sich eine erste Lastinsel 18, welche sich unmittelbar unterhalb einer zweiten Lastinsel 19 im zweiten Brennraum 6 des Nachbrennermoduls 7 befindet. Diese beiden Lastinseln 18, 19 befinden sich unterhalb des Stacks 1 und nehmen Druckspannungen auf und sorgen somit für mehr Stabilität der Vorrichtung. Somit werden Biegebeanspruchungen vermieden; diese könnten beim Betrieb auf Betriebstemperatur zu einer Deformation durch Kriechen oder zu Sprödbruch führen. Das Startbrennermodul 4, die Trennwand 14 und das Nachbrennermodul 7 sind übereinander geführt positioniert. Durch Aufbringen von Druckkraft entsteht ein Kraftschluss. Zwischen dem Stack 1, dem Nachbrennermodul 7, der Trennwand 14 und dem Startbrennermodul 4 befinden sich Dichtungen, die unter der aufgeprägten Druckkraft für eine hinreichende Abdichtung der Brennräume sorgen.

Durch den kraftschlüssigen Verbund des Brennstoffzellen-Stacks 1 mit dem Nachbrennermodul 7, dem Startbrennermodul 4 sowie dem Frischluft-Abgas-Wärmetauscher 8 ergibt sich einerseits ein kompakter Aufbau und andererseits eine gute Wärmeleitung, so dass das System schnell auf Betriebstemperatur gebracht werden kann.

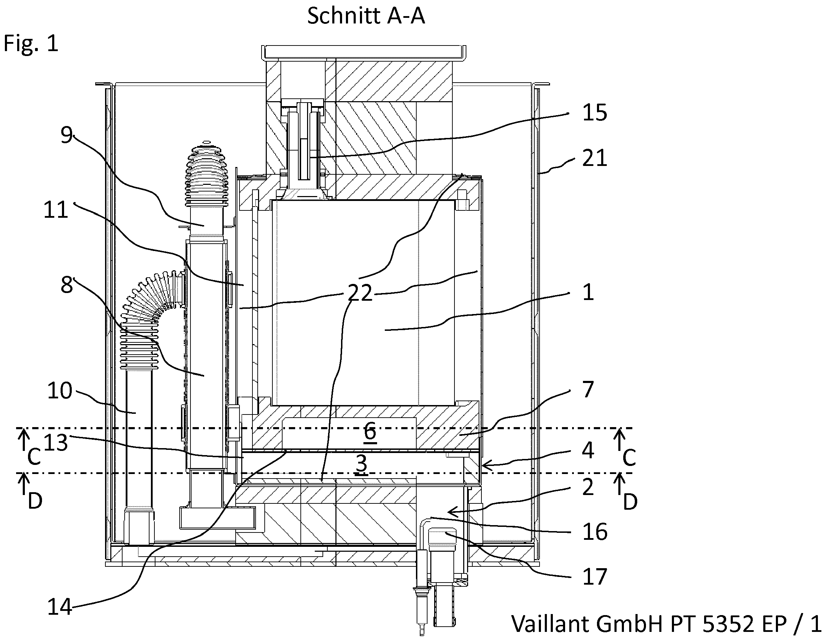

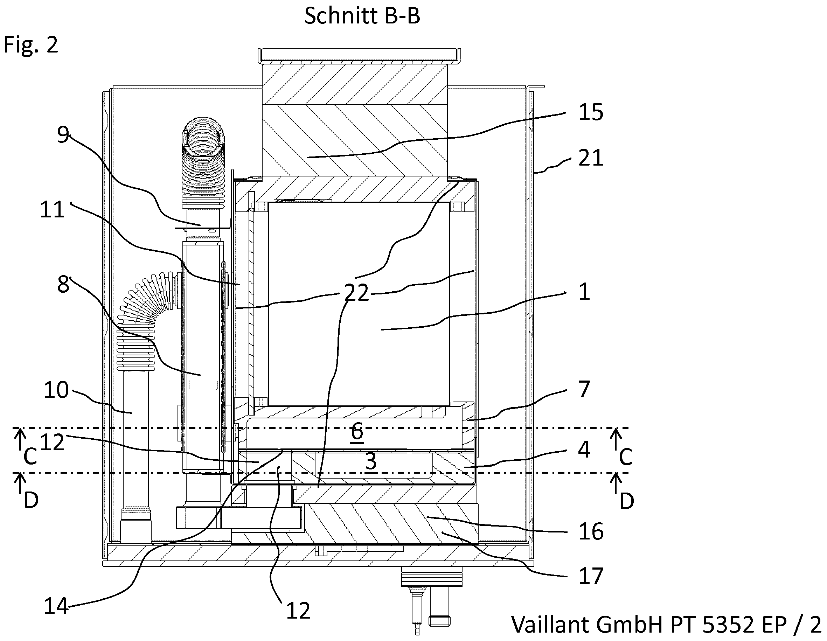

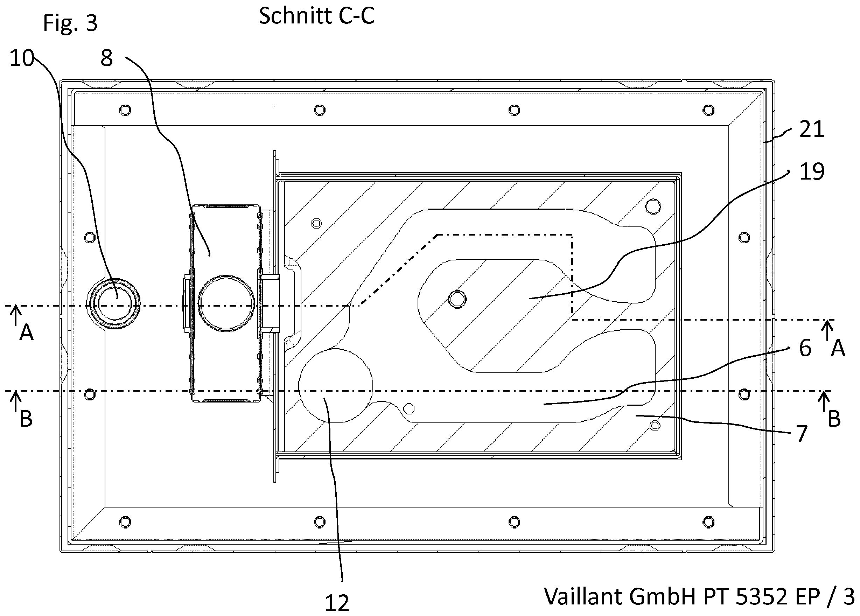

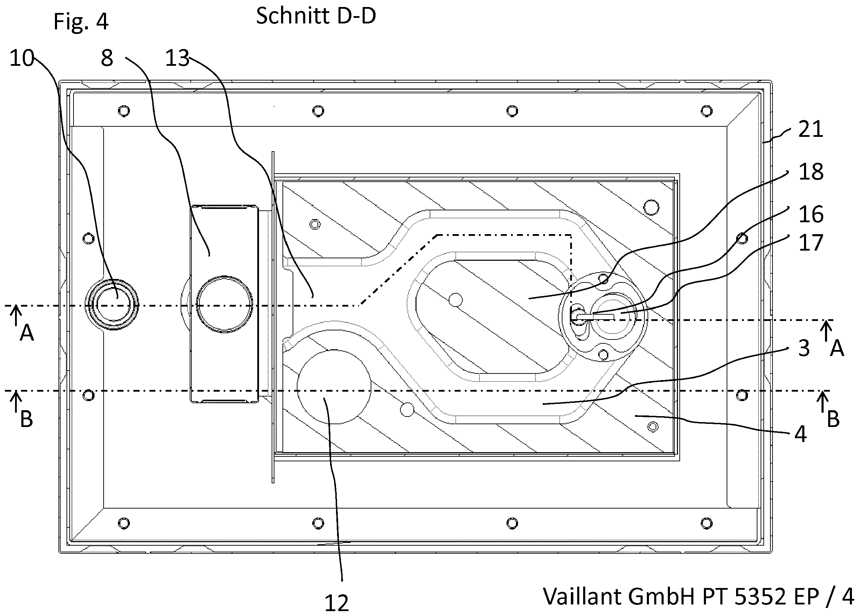

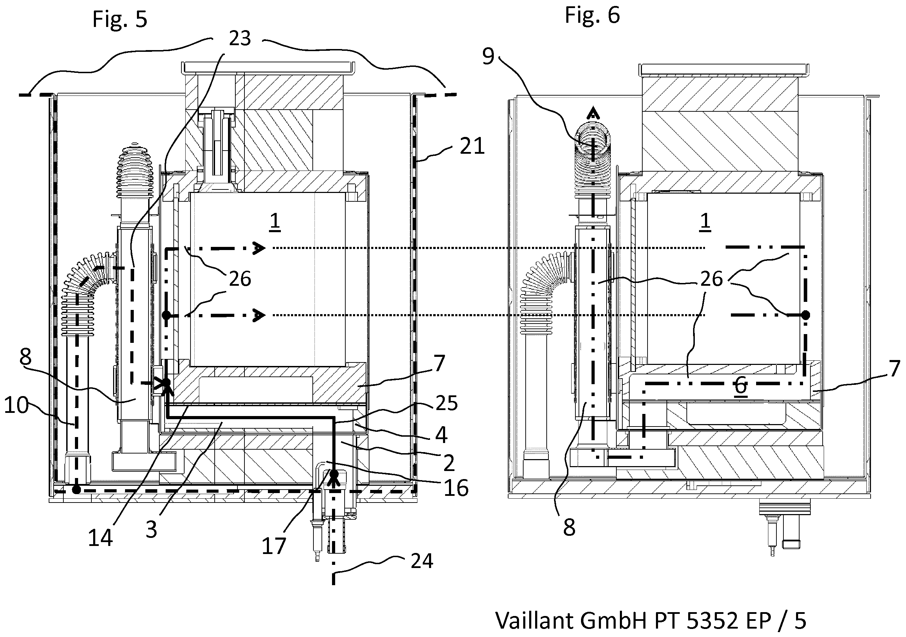

Wie in Figur 5 dargestellt, wird zum Start der Brennstoffzellen-Anlage zunächst im Startbrennermodul 4 beim Startbrenner 2 ein überstöchiometrisches zündfähiges Brenngas-Luft-Gemisch 24 durch das Vlies 17 geleitet und von der Zünd- und Überwachungseinrichtung 16 entzündet. Der Ausbrand findet im ersten Brennraum 3 statt. Über die Trennwand 14 gelangt Wärme in das Nachbrennermodul 7. Die heißen Startbrennerabgase 25 strömen vom ersten Brennraum 3 zusammen mit Kathodenluft 23, die über den Innenraum der doppelwandigen Unterdruckammer 21 in die Frischluftzuführung 10 und den Frischluft-Abgas-Wärmetauscher 8 strömt, zu den Kathodengasräumen des Brennstoffzellen-Stacks 1. Die Startbrennerabgase 25 und die Kathodenluft 23 bilden hierbei ein Systemabgas 26, welches den Brennstoffzellen-Stacks 1 erhitzt. Das Systemabgas 26 gelangt aus den Kathodengasräumen des Brennstoffzellen-Stacks 1 in das Nachbrennermodul 7 mit dem zweiten Brennraum 6 und heizen das Nachbrennermodul 7 dadurch auf; dies ist in Figur 6 dargestellt. Die Abgase des Nachbrennermoduls 7 werden in den Frischluft-Abgas-Wärmetauscher 8 und von diesem über den Abgasausgang 9 zunächst zu einem Heizungswärmeaustauscher und von dort in die Umgebung geleitet.

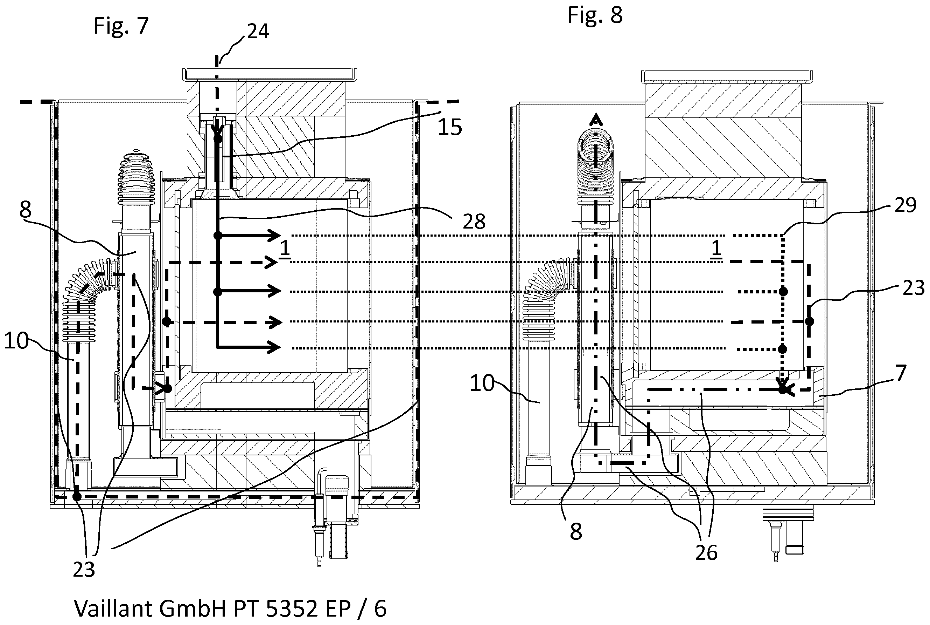

Ist der Brennstoffzellen-Stack 1 auf Betriebstemperatur (mindestens 700°C) aufgeheizt, so wird der Startbrenner 2 abgeschaltet. Zugleich wird den Anodengasräumen des Brennstoffzellen-Stacks 1 über den Reformer 15, welcher mit einem unterstöchiometrischen Brenngas-Luft-Gemisch 24 beaufschlagt wird, Reformat 28 zugeführt; dies ist in Figur 7 dargestellt. Im Reformat 28 des Reformers 15 befinden sich außer dem Luftbestandteil Stickstoff N₂ die Gase Wasserstoff H₂, Kohlenmonoxid CO, Kohlendioxid CO₂, Wasserdampf H₂O und geringe Mengen Methan CH₄. In dem Brennstoffzellen-Stack 1 findet eine elektrochemische Reaktion statt, bei welcher ein elektrischer Strom fließt. Diese elektrochemische Reaktion ist dem Fachmann bekannt und muss hier nicht näher erläutert werden. Am Ausgang der Anodenräume erhöht sich durch die Reaktion der Anteil an den Verbrennungsprodukten Kohlendioxid CO₂ und Wasserdampf H₂O, während der Anteil an Wasserstoff H₂ und Kohlenmonoxid CO abnimmt. Der Anteil der Kathodenluft 23, welche nicht an der elektrochemischen Reaktion teilnimmt, und das Anodenabgas 29 des Brennstoffzellen-Stacks 1 werden in das vorgewärmte Nachbrennermodul 7 geleitet und dort zusammengeführt; dies ist in Figur 8 dargestellt. Dabei verbrennen die restlichen brennbaren Bestandteile exotherm. Hierbei stellt sich üblicherweise eine Temperatur im Bereich zwischen 800 und 950°C ein. Das Systemabgas 26 wird über den Frischluft-Abgas-Wärmetauscher 8, wo Wärme auf nachströmende Kathodenluft 23 übertragen wird, in die Umgebung abgeführt.

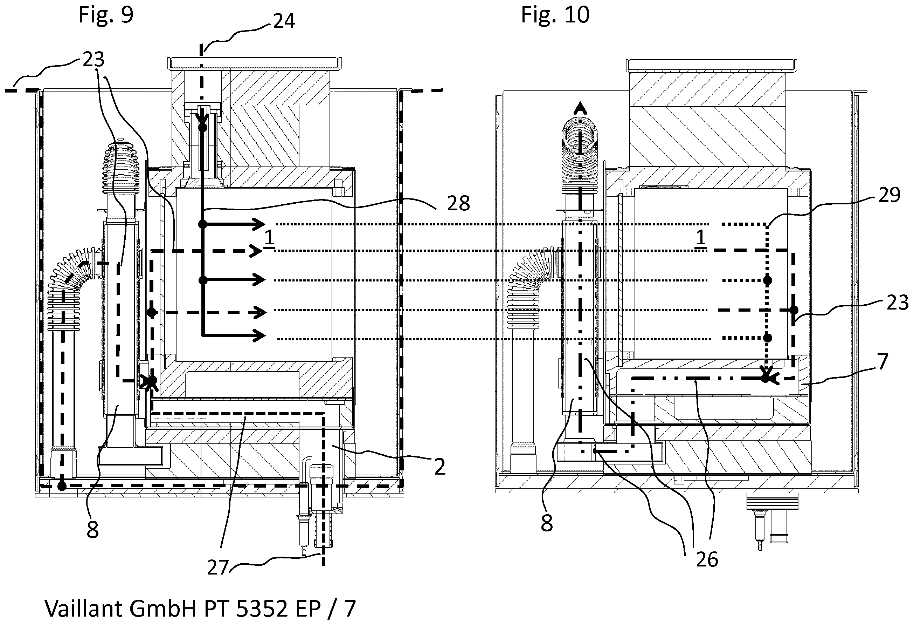

Die Figuren 9 und 10 zeigen einen stationären Betriebszustand, der sich von dem in den Figuren 7 und 8 dadurch unterscheidet, dass kalte Bypasskathodenluft 27 über den abgeschalteten Startbrenner 2 der Kathodenluft 23 vor dem Brennstoffzellen-Stack 1 zugemischt wird.

Die Erfindung ist nicht auf SOFC-Brennstoffzellen beschränkt, sondern kann im Zusammenhang mit allen Brennstoffzellen, welche eine Betriebstemperatur oberhalb der Umgebungstemperatur besitzen, angewendet werden.

### Bezuaszeichenliste

- 1: Brennstoffzellen-Stack
- 2: Startbrenner
- 3: erster Brennraum
- 4: Startbrennermodul
- 6: zweiter Brennraum
- 7: Nachbrennermodul
- 8: Frischluft-Abgas-Wärmetauscher
- 9: Abgasausgang
- 10: Frischluftzuführung
- 11: Frischlufteintritt
- 12: Nachbrennerausgang
- 13: Startbrennerausgang
- 14: Trennwand
- 15: Reformer
- 16: Zünd- und Überwachungseinrichtung
- 17: Vlies
- 18: erste Lastinsel
- 19: zweite Lastinsel
- 21: Unterdruckkammer
- 22: Blechmantel
- 23: Kathodenluft
- 24: Brenngas-Luft-Gemisch
- 25: Startbrennerabgas
- 26: Systemabgas
- 27: Bypasskathodenluft
- 28: Reformat
- 29: Anodenabgas

## Patentansprüche

1. Brennstoffzellenanlage mit einem Brennstoffzellen-Stack (1), einem Startbrenner (2), einem Nachbrennermodul (7) und einem Frischluft-Abgas-Wärmetauscher (8), wobei in dem Brennstoffzellen-Stack (1) eine elektrochemische Reaktion stattfindet, bei welcher ein elektrischer Strom fließt,
die Abgase des Brennstoffzellen-Stacks (1) in das Nachbrennermodul (7) geleitet werden,
der Frischluft-Abgas-Wärmetauscher (8) auf der einen Seite mit dem Nachbrennerausgang (12) des Nachbrennermoduls (7) und einem Abgasausgang (9) verbunden ist und mit der anderen Seite mit einer Frischluftzuführung (10) und dem Frischlufteintritt (11) des Brennstoffzellen-Stacks (1) verbunden ist,
und der Startbrenner (2) mit dem Brennstoffzellen-Stack (1) derart verbunden ist, dass die Abgase des Startbrenners (2) zum Brennstoffzellen-Stack (1) geleitet werden,
**dadurch gekennzeichnet, dass** der Startbrenner (2) über einen ersten Brennraum (3) in einem Startbrennermodul (4) verfügt, das Nachbrennermodul (7) über einen zweiten Brennraum (6) verfügt,
der Brennstoffzellen-Stack (1), das Nachbrennermodul (7) und das Startbrennermodul (4) übereinander miteinander verbunden sind,
und dass sich im ersten Brennraum (3) des Startbrennermoduls (4) eine erste Lastinsel (18) befindet, welche sich unmittelbar unterhalb einer zweiten Lastinsel (19) im zweiten Brennraum (6) des Nachbrennermoduls (7) befindet.

2. Brennstoffzellenanlage nach Anspruch 1, **dadurch gekennzeichnet, dass** der Brennstoffzellen-Stack (1) und der Frischluft-Abgas-Wärmetauscher (8) nebeneinander miteinander verbunden sind.

3. Brennstoffzellenanlage nach Anspruch 1 oder 2, **dadurch gekennzeichnet, dass** das Startbrennermodul (4) aus einer Platte besteht, in welcher der ersten Brennraum (3) integriert ist, in dem Startbrennermodul (4) ein Brenner zur Verbrennung eines Brenngas-Luft-Gemischs angeordnet ist und das das Startbrennermodul (4) über einen Startbrennerausgang (13) verfügt.

4. Brennstoffzellenanlage nach einem der Ansprüche 1 bis 3, **dadurch gekennzeichnet, dass** das Nachbrennermodul (7) aus einer Platte besteht, in welcher der zweite Brennraum (6) und der Nachbrennerausgang (12) integriert sind.

5. Brennstoffzellenanlage nach einem der Ansprüche 3 oder 4, **dadurch gekennzeichnet,** die Platte des Startbrennermoduls (4) und / oder des Nachbrennermoduls (7) aus Calciumsilikat und / oder Cordierit besteht

6. Brennstoffzellenanlage nach einem der Ansprüche 1 bis 5, **dadurch gekennzeichnet, dass** die Einheit aus Brennstoffzellen-Stack (1), Startbrennermodul (4) und Nachbrennermodul (7) von einem Blechmantel (22), welcher vorzugsweise geschweißt ist, umschlossen ist.

7. Brennstoffzellenanlage nach einem der Ansprüche 1 bis 6, **dadurch gekennzeichnet, dass** der ersten Brennraum (3) des Startbrennermoduls (4) mittels einer Trennwand (14) von dem zweite Brennraum (6) des Nachbrennermoduls (7) getrennt ist.

8. Brennstoffzellenanlage nach Anspruch 7, **dadurch gekennzeichnet, dass** zwischen dem Brennstoffzellen-Stack (1) und dem Nachbrennermodul (7) Dichtungen aus Glimmer und / oder zwischen dem Nachbrennermodul (7), der Trennplatte (14) und dem Startbrennermodul (4) aus Keramikfaserpapier, vorzugsweise bestehend aus SiO2, CaO und / oder MgO, positioniert sind.

## Claims

1. Fuel cell system with a fuel cell stack (1), a starter burner (2), an afterburner module (7) and a fresh air-exhaust gas heat exchanger (8), wherein in the fuel cell stack (1) an electrochemical reaction takes place from which electric current flows, the exhaust gases of the fuel cell stack (1) are directed into the afterburner module (7), the fresh air-exhaust gas heat exchanger (8) is connected on one side to the afterburner output (12) of the afterburner module (7) and an exhaust gas output (9) and on the other side to a fresh air supply (10) and the fresh air inlet (11) of the fuel cell stack (1), and the starter burner (2) is connected to the fuel cell stack (1) such that the exhaust gases of the starter burner (2) are directed to the fuel cell stack (1), **characterised in that** the starter burner (2) has a first combustion chamber (3) in a starter burner module (4), the afterburner module (7) has a second combustion chamber (6), the fuel cell stack (1), the afterburner module (7) and the starter burner module (4) are connected next to one another, and **in that** in the first combustion chamber (3) of the starter burner module (4) a first load island (18) is located which is positioned directly below a second load island (19) in the second combustion chamber (6) of the afterburner module (7).

2. Fuel cell system according to claim 1, **characterised in that** the fuel cell stack (1) and the fresh air-exhaust gas heat exchanger (8) are connected next to one another.

3. Fuel cell system according to claim 1 or 2, **characterised in that** the starter burner module (4) consists of a plate, in which the first combustion chamber (3) is integrated, in the starter burner module (4) a burner is arranged for burning a fuel gas air mixture and the starter burner module (4) has a starter burner output (13).

4. Fuel cell system according to any of claims 1 to 3, **characterised in that** the afterburner module (7) consists of a plate, in which the second combustion chamber (6) and the afterburner output (12) are integrated.

5. Fuel cell system according to any of claims 3 or 4, **characterised in that** the plate of the starter burner module (4) and/or the afterburner module (7) is made of calcium silicate and/or cordierite.

6. Fuel cell system according to any of claims 1 to 5, **characterised in that** the unit of the fuel cell stack (1), starter burner module (4) and afterburner module (7) is surrounded by a sheet metal casing (22), which is preferably welded.

7. Fuel cell system according to any of claims 1 to 6, **characterised in that** the first combustion chamber (3) of the starter burner module (4) is separated by means of a separating wall (14) from the second combustion chamber (6) of the afterburner module (7).

8. Fuel cell system according to claim 7, **characterised in that** between the fuel cell stack (1) and the afterburner module (7) mica seals are positioned and/or between the afterburner module (7), the separator plate (14) and the starter burner module (4) ceramic fibre paper is positioned, preferably consisting of SiO2, CaO and/or MgO.

## Revendications

1. Système de piles à combustible avec un empilement de piles à combustible (1), un brûleur de démarrage (2), un module de postcombustion (7) et un échangeur de chaleur air frais/gaz d'échappement (8), une réaction électrochimique ayant lieu dans l'empilement de piles à combustible (1), dans laquelle un courant électrique circule,
les gaz d'échappement de l'empilement de piles à combustible (1) sont introduits dans le module de postcombustion (7),
l'échangeur de chaleur air frais/gaz d'échappement (8) est relié d'un côté à la sortie de postcombustion (12) du module de postcombustion (7) et à une sortie de gaz d'échappement (9) et de l'autre côté à une alimentation en air frais (10) et à l'entrée d'air frais (11) de l'empilement de piles à combustible (1), et le brûleur de démarrage (2) est relié à l'empilement de piles à combustible (1) de sorte que les gaz d'échappement du brûleur de démarrage (2) sont dirigés vers l'empilement de piles à combustible (1),
**caractérisé en ce que** le brûleur de démarrage (2) possède une première chambre de combustion (3) dans un module de brûleur de démarrage (4), le module de postcombustion (7) possède une deuxième chambre de combustion (6),
l'empilement de piles à combustible (1), le module de postcombustion (7) et le module de brûleur de démarrage (4) sont connectés entre eux les uns sur les autres,
et **en ce qu'**un premier îlot de charge (18) est situé dans la première chambre de combustion (3) du module de brûleur de démarrage (4), qui est situé directement sous un deuxième îlot de charge (19) dans la deuxième chambre de combustion (6) du module de postcombustion (7).

2. Système de piles à combustible selon la revendication 1, **caractérisé en ce que** l'empilement de piles à combustible (1) et l'échangeur de chaleur air frais/gaz d'échappement (8) sont connectés entre eux l'un à côté de l'autre.

3. Système de piles à combustible selon la revendication 1 ou 2, **caractérisé en ce que** le module de brûleur de démarrage (4) est constitué d'une plaque dans laquelle est intégrée la première chambre de combustion (3), un brûleur pour la combustion d'un mélange gaz combustible/air est disposé dans le module de brûleur de démarrage (4) et le module de brûleur de démarrage (4) présente une sortie de brûleur de démarrage (13).

4. Système de piles à combustible selon l'une quelconque des revendications 1 à 3, **caractérisé en ce que** le module de postcombustion (7) est constitué d'une plaque dans laquelle sont intégrées la deuxième chambre de combustion (6) et la sortie de postcombustion (12).

5. Système de piles à combustible selon l'une quelconque des revendications 3 ou 4, **caractérisé en ce que** la plaque du module de brûleur de démarrage (4) et/ou du module de postcombustion (7) est constituée de silicate de calcium et/ou de cordiérite.

6. Système de piles à combustible selon l'une quelconque des revendications 1 à 5, **caractérisé en ce que** l'unité comprenant l'empilement de piles à combustible (1), le module de brûleur de démarrage brûleur (4) et le module de postcombustion (7) est entourée d'une enveloppe en tôle (22) qui est de préférence soudée.

7. Système de piles à combustible selon l'une quelconque des revendications 1 à 6, **caractérisé en ce que** la première chambre de combustion (3) du module de brûleur de démarrage (4) est séparée de la deuxième chambre de combustion (6) du module de postcombustion (7) au moyen d'une paroi de séparation (14).

8. Système de piles à combustible selon la revendication 7, **caractérisé en ce que** des joints en mica sont disposés entre l'empilement de piles à combustible (1) et le module de postcombustion (7) et/ou des joints en papier de fibres céramiques, de préférence en SiO2, CaO et/ou MgO, sont disposés entre le module de postcombustion (7), la plaque de séparation (14) et le module de brûleur de démarrage (4).
